# FASCICULE DE BREVET EUROPEEN

(11) **EP 3 966 477 B1**
(45) Date de publication et mention de la délivrance du brevet: **22.11.2023**
(21) Numéro de dépôt: 20729629.4
(22) Date de dépôt: 06.05.2020
(51) Int. Cl.: F16J 15/3212, F04D 29/00, F04D 29/16, F04D 29/10

(54) **GARNITURE D'ETANCHEITE COMPACTE POUR ASSURER L'ETANCHEITE ENTRE UN ARBRE ROTATIF ET UN CORPS STATIONNAIRE D'UNE MACHINE**
KOMPAKTE DICHTUNG ZUM ABDICHTEN ZWISCHEN EINER ROTIERENDEN WELLE UND EINEM STATIONÄREN KÖRPER EINER MASCHINE
COMPACT SEAL FOR SEALING BETWEEN A ROTATING SHAFT AND A STATIONARY BODY OF A MACHINE

(30) Priorité: 06.05.2019 FR 1904720
(43) Date de publication de la demande: 16.03.2022
(73) Titulaire: CYCLAM, 80000 Amiens (FR)
(72) Inventeur: DUJARDIN, Raphaël, 80470 Saveuse (FR); ROUTIER, Jean-Luc, 80470 Saint Sauveur (FR)
(74) Mandataire: Fédit-Loriot
(86) Numéro de dépôt international: PCT/EP2020/062618
(87) Numéro de publication internationale: WO 2020/225324

(56) Documents cités:
- DE-A1-102011 107 394
- JP-U- S6 058 897
- US-A1- 2011 079 961
- US-A1- 2017 130 845

## Description

L'invention a pour objet une garniture d'étanchéité, aussi appelée garniture mécanique, assurant l'étanchéité dynamique entre un arbre rotatif et un corps stationnaire, notamment une enceinte stationnaire.

De telles garnitures d'étanchéité sont utilisées dans de nombreuses machines tournantes, comme les pompes, les agitateurs, les compresseurs, les turbines à gaz, les centrifugeuses, les raffineurs, les réacteurs ..... Par exemple, une garniture d'étanchéité de pompe est habituellement positionnée entre l'arbre de la pompe et le corps de cette dernière.

Ce type de garniture d'étanchéité comprend généralement un élément tournant, aussi appelé rotor, lié à l'arbre en rotation et un élément fixe, aussi appelé stator, lié au corps de l'équipement. L'étanchéité résulte de la mise en appui de surfaces en regard du rotor et du stator s'étendant dans un plan radial, perpendiculaire à l'axe de l'arbre sur lequel est montée la garniture. Un élément formant ressort logé à l'intérieur du stator exerce habituellement une pression sur une bague de frottement interne au stator afin de pousser ce dernier en direction du rotor suivant une direction parallèle à l'axe de l'arbre rotatif.

Cet élément formant ressort est souvent situé du côté de la bague de frottement opposé au rotor suivant la direction axiale de l'arbre. Il en résulte un encombrement axial de la garniture d'étanchéité relativement important.

Dans certaines garnitures, l'élément formant ressort peut être situé sensiblement au droit de la bague de frottement dans un plan radial, tel que décrit par exemple dans le document US910764B2. La garniture décrite dans ce document présente cependant une bague de frottement relativement complexe, cette dernière devant présenter sur une face externe cylindrique un décrochement suivant la direction radiale pour recevoir et bloquer un déplacement axial d'un joint (voir par exemple la figure 6 de ce document).

D'autres garnitures présentent un joint qui est pris en sandwich radialement entre la bague de frottement et une partie du boîtier, tel que dans les documents DE 10 2011 107394A1 et JP360058897U. De telles garnitures nécessitent un respect strict des tolérances de fabrication des différentes pièces afin d'assurer l'étanchéité tout en maintenant la possibilité de glissement de la bague de frottement.

Il existe donc un besoin pour réaliser une garniture d'étanchéité compacte et simple à réaliser.

A cet effet, un objet de l'invention concerne une garniture d'étanchéité destinée à assurer une étanchéité entre un arbre rotatif et un corps stationnaire d'une machine, comprenant :
- une bague de frottement présentant un axe de symétrie X et deux surfaces s'étendant radialement par rapport à l'axe X,
- une contre-bague présentant un axe de symétrie confondu avec l'axe X et une surface de frottement radiale en appui contre l'une des surfaces radiales de la bague de frottement,
- un ressort de compression en appui contre un élément de transmission présentant un axe de symétrie confondu avec l'axe X, l'élément de transmission présentant une paroi cylindrique comportant une première extrémité formant un premier rebord radial situé du côté de la contre-bague et s'étendant dans une direction opposée à l'axe X et une deuxième extrémité opposée formant un deuxième rebord radial s'étendant en direction de l'axe X.

Selon l'invention, la bague de frottement présente une surface externe cylindrique d'axe X reliant, notamment directement, ses deux surfaces radiales. En outre, le ressort de compression est en appui contre le premier rebord de l'élément de transmission, le deuxième rebord de l'élément de transmission étant situé en partie en regard de la surface radiale de la bague de frottement distante de la contre-bague et la paroi cylindrique de l'élément de transmission étant située en partie en regard de la surface externe cylindrique de la bague de frottement, cet agencement permettant à l'élément de transmission de coopérer avec la bague de frottement pour lui transmettre les efforts exercés par le ressort de compression.

Cet agencement particulier de l'élément de transmission permet de réduire l'encombrement axial de la garniture d'étanchéité. En effet, le ressort de compression s'étend ainsi au moins en partie au niveau de la partie cylindrique de la bague de frottement, la reprise d'efforts résultant de la coopération du deuxième rebord et de la paroi cylindrique de l'élément de transmission avec la bague de frottement et permettant une bonne transmission des efforts exercés par le ressort à la bague de frottement malgré la position avancée du ressort de compression en direction de la contre-bague. En outre, la bague de frottement présentant une unique surface externe cylindrique s'étendant de manière continue d'une surface radiale à l'autre peut être réalisée de manière particulièrement simple.

Avantageusement, la paroi cylindrique de l'élément de transmission peut s'étendre sur plus de la moitié, par exemple sur plus des deux tiers, de la longueur de la surface externe cylindrique de la bague de frottement suivant la direction de l'axe X. Un agencement particulièrement compact axialement est ainsi obtenu.

Avantageusement, le premier rebord de l'élément de transmission peut être distant de la surface de frottement de la contre-bague, suivant l'axe X, d'un jeu prédéterminé. Notamment, ce jeu peut par exemple être choisi de sorte que le premier rebord ne puisse entrer en contact avec la contre-bague lors de l'utilisation de la garniture d'étanchéité.

Avantageusement, l'élément de transmission peut être réalisé d'une seule pièce, notamment en métal ou alliage, notamment à base de métal tel qu'un acier, par exemple en acier inoxydable. Une réalisation d'une seule pièce permet de faciliter la réalisation de la pièce et d'augmenter sa résistance, notamment aux frottements, en particulier lorsque le matériau utilisé est un métal ou un alliage, notamment un alliage contenant un ou plusieurs métaux. L'élément de transmission joue ainsi à la fois le rôle d'une bague d'appui pour le ressort de compression et d'un élément de transmission d'efforts.

Avantageusement, la garniture d'étanchéité peut comprendre une bague d'appui du ressort de compression, cette bague d'appui présentant une partie cylindrique d'axe X située au moins en partie en regard de la partie cylindrique de l'élément de transmission, notamment de diamètre supérieur au diamètre de cette dernière, et une partie radiale s'étendant en direction de l'axe X, en regard du premier rebord de l'élément de transmission. Un tel agencement permet de réduire l'encombrement de la garniture d'étanchéité. La bague d'appui et l'élément de transmission définissent ainsi entre leurs surfaces un logement pour le ressort de compression.

Avantageusement, la garniture d'étanchéité peut comprendre un élément d'étanchéité secondaire s'étendant en partie entre l'élément de transmission et la bague de frottement, notamment entre la paroi cylindrique et le deuxième rebord radial dirigé vers l'axe X de l'élément de transmission et les surfaces en regard de la bague de frottement.

Notamment, la garniture d'étanchéité peut comprendre un boîtier logeant la bague de frottement, l'élément de transmission, le ressort de compression et l'élément d'étanchéité secondaire.

Avantageusement, l'élément d'étanchéité secondaire peut s'étendre en partie entre la bague d'appui et ce boîtier. De préférence, la partie de l'élément d'étanchéité secondaire s'étendant entre la bague d'appui et le boîtier s'étend uniquement entre la partie radiale de la bague d'appui et le boîtier, de préférence aussi entre la bague d'appui et le boîtier du côté de l'axe X. L'élément d'étanchéité secondaire ne s'étend alors pas entre la partie cylindrique de la bague d'appui et le boîtier, ce qui permet de limiter l'encombrement de la garniture d'étanchéité selon l'invention suivant une direction perpendiculaire à l'axe X.

L'élément d'étanchéité secondaire s'étend ainsi en partie entre l'élément de transmission et la bague de frottement et en partie entre la bague d'appui et le boîtier logeant la bague de frottement, l'élément de transmission, le ressort de compression et l'élément d'étanchéité secondaire. Le ressort de compression étant en appui contre l'élément de transmission et la bague d'appui, la force exercée par le ressort comprime l'élément d'étanchéité secondaire contre la bague de frottement et le boîtier et règle ainsi à la fois l'étanchéité et la possibilité de glissement de la bague de frottement. Cet agencement présente l'avantage de ne pas nécessiter des tolérances strictes pour la réalisation de la bague de frottement, du boîtier, de l'élément de transmission et de la bague d'appui, simplifiant ainsi la réalisation de la garniture d'étanchéité.

Avantageusement, pour une meilleure étanchéité, la partie de l'élément d'étanchéité secondaire s'étendant entre l'élément de transmission et la bague de frottement et la partie de l'élément d'étanchéité secondaire s'étendant entre la bague d'appui et le boîtier logeant la bague de frottement peuvent être reliées par une partie cylindrique située du côté de l'axe X, s'étendant notamment entre la bague d'appui et l'élément de transmission d'une part et le boîtier d'autre part. Pour une réalisation simple, cet élément d'étanchéité secondaire peut être réalisé d'une pièce.

Avantageusement, des surfaces radiales en contact de l'élément d'étanchéité et de la bague d'appui peuvent présenter des décrochements complémentaires suivant la direction de l'axe X bloquant leur déplacement relatif suivant une direction perpendiculaire à l'axe X. Ceci permet d'améliorer leur maintien assemblé et de participer à l'étanchéité de l'ensemble.

La garniture d'étanchéité peut comporter un ressort de compression à spires qui peut être de forme cylindrique ou conique, de préférence de forme conique. Dans ce dernier cas, c'est l'extrémité du ressort de plus faible diamètre qui est de préférence en appui contre le premier rebord de l'élément de transmission.

L'invention permet d'obtenir une garniture d'étanchéité particulièrement compacte suivant l'axe X.

Avantageusement, la dimension de l'élément de transmission suivant l'axe X peut ainsi représenter 30% ou plus de la dimension totale de garniture dans cette même direction, notamment de 30 à 70% de cette dimension totale, de préférence de 30 à 60% de cette dimension totale.

Avantageusement, la dimension de la bague de frottement suivant l'axe X peut représenter 75% ou moins de la dimension totale de la garniture dans cette direction, notamment de 35 à 75% de la dimension totale, de préférence de 35 à 65%. Ces dimensions peuvent être combinées avec n'importe quelle des dimensions de l'élément de transmission, les plages préférentielles constituant un mode de réalisation préféré.

La dimension totale de la garniture suivant l'axe X correspond à la dimension totale en considérant tous les éléments de la garniture dans un état assemblé.

Cet état assemblé peut avantageusement résulter du sertissage du boîtier logeant la bague de frottement, l'élément de transmission, le ressort de compression et l'élément d'étanchéité secondaire avec un manchon logeant la contre bague et une bague formant un joint et élément de blocage pour la contre-bague et disposé entre celle-ci et le manchon. Ce sertissage peut notamment être réalisé du côté de l'axe X.

La garniture d'étanchéité selon l'invention peut être utilisée dans de nombreuses machines tournantes comprenant un arbre rotatif.

L'invention concerne ainsi également une machine tournante comportant un corps stationnaire et un arbre rotatif équipé d'une garniture d'étanchéité selon l'invention. La contre-bague est alors montée solidaire en rotation de l'arbre, la bague de frottement, l'élément de transmission et le ressort de compression étant fixes, montés solidaires du corps stationnaire.

L'invention est maintenant décrite en référence aux dessins annexés, non limitatifs, dans lesquels :
[Fig. 1] La figure 1 représente une vue en perspective d'une face d'une garniture d'étanchéité selon un mode de réalisation de l'invention.
[Fig. 2] La figure 2 représente une vue en perspective de l'autre face de la garniture d'étanchéité de la figure 1.
[Fig. 3] La figure 3 représente une vue en coupe de la garniture d'étanchéité représentée sur les figures 1 et 2.

Par plan radial, on entend un plan s'étendant perpendiculairement à l'axe de symétrie X défini dans la présente description.

Dans la présente description, lorsqu'un élément est qualifié de « radial », on entend qu'il s'étend dans un plan radial.

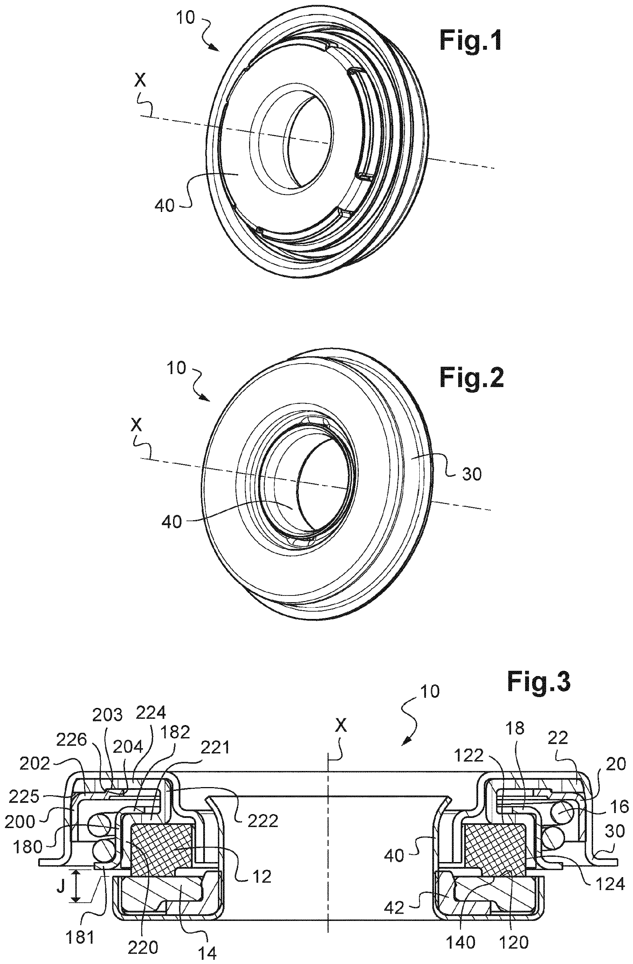

Les figures 1 à 3 représentent une garniture d'étanchéité 10 destinée à assurer une étanchéité entre un arbre rotatif et un corps stationnaire d'une machine (non représentés sur les figures), par exemple une pompe. Une telle garniture d'étanchéité 10 est ainsi conçue pour pouvoir être enfilée suivant un axe X sur l'arbre rotatif d'une machine. La plupart des éléments d'une garniture d'étanchéité de ce type présentent ainsi une symétrie, notamment une symétrie de révolution, par rapport à cet axe X. Sur les figures, l'axe X de la garniture d'étanchéité 10 est confondu avec l'axe de l'arbre rotatif lorsque la garniture d'étanchéité 10 est montée sur cet arbre.

La garniture d'étanchéité 10 comprend notamment une bague de frottement 12, une contre-bague 14, un ressort de compression 16 et un élément de transmission 18. Le ressort de compression 16 pousse la bague de frottement 12 en direction de la contre-bague 14 suivant la direction de l'axe X assurant ainsi l'appui de la bague de frottement 12 contre la contre-bague 14 et l'étanchéité de l'ensemble.

La bague de frottement 12, d'axe de symétrie X, présente deux surfaces 120, 122 s'étendant radialement par rapport à l'axe X. Ces surfaces 120, 122 sont appelées surfaces radiales dans la suite de la description. Elles sont reliées, ici directement, par une surface externe cylindrique 124 d'axe X de la bague de frottement 12. Autrement dit, comme on peut le voir clairement sur la figure 3, la forme de la bague de frottement 12 est particulièrement simple, avec une unique surface externe cylindrique 124 reliant les deux surfaces radiales opposées 120, 122. La bague de frottement est réalisée en un matériau résistant à l'usure, par exemple à base de carbone synthétique (carbone graphite), en acier spécial ou en matériau tel qu'un carbure (carbure de tungstène, de silicium ou autre) ou un oxyde métallique (oxyde d'aluminium).

La contre-bague 14, d'axe de symétrie X, présente une surface de frottement radiale 140 en appui contre la surface radiale 120 de la bague de frottement 12. Les surfaces radiales 120, 122, 140 sont ici en forme d'anneau. La contre-bague est également réalisée en un matériau résistant à l'usure, du même type que celui utilisé pour la bague de frottement.

L'élément de transmission 18 présente une paroi cylindrique 180 d'axe de symétrie X. L'une des extrémités de cette paroi cylindrique 180 forme un premier rebord radial 181 situé du côté de la contre-bague 14 s'étendant dans une direction opposée à l'axe X, l'autre extrémité de la paroi cylindrique 180 formant un deuxième rebord radial 182 s'étendant en direction de l'axe X. Dans l'exemple, les premier et second rebords 181, 182 sont ainsi en forme d'anneau.

Le ressort de compression 16, notamment une de ses extrémités, est en appui contre l'élément de transmission 18, ce dernier coopérant avec la bague de frottement 12 pour lui transmettre les efforts exercés par le ressort de compression 16. En particulier, la garniture d'étanchéité 10 selon l'invention est agencée de sorte que :
- le deuxième rebord 182 de l'élément de transmission 18 est situé en partie en regard de la surface radiale 122 de la bague de frottement 12 distante de la contre-bague 14, et
- la paroi cylindrique 180 de l'élément de transmission 18 est située en partie en regard de la surface externe cylindrique 124 de la bague de frottement 12.

Cet agencement particulier favorise la transmission des efforts du ressort de compression 16 à la bague de frottement 12, et ce malgré le fait que le ressort de compression s'étende en partie autour de la bague de frottement 12.

Dans l'exemple, on notera que la paroi cylindrique 180 de l'élément de transmission 18 s'étend sur plus de la moitié, en particulier sur plus des deux tiers, de la longueur de la surface externe cylindrique 124 de la bague de frottement 12 suivant la direction de l'axe X. Plus précisément, ici le premier rebord 181 de l'élément de transmission 18 est distant de la surface de frottement 140 de la contre-bague 14, suivant l'axe X, d'un jeu prédéterminé J. Ce jeu peut être un jeu suffisant pour que, lorsque la garniture d'étanchéité est montée sur un arbre rotatif, la bague de frottement et la contre-bague soient en contact mais que le premier rebord 181 et la contre-bague 14 n'entrent jamais en contact quelle que soit la vitesse de rotation de l'arbre. Un tel jeu pourra ainsi être déterminé par l'homme du métier selon les conditions d'utilisation de la garniture d'étanchéité.

Dans l'exemple représenté, l'élément de transmission 18 est réalisé d'une seule pièce, ici en métal ou alliage, de préférence en acier inoxydable. L'utilisation de matériaux résistants, notamment à base de métal, permet de réduire l'usure de l'élément de transmission de 18 due aux frottements, notamment lors de l'action du ressort. Il n'est alors pas nécessaire de prévoir une pièce supplémentaire entre l'élément de transmission 18 et le ressort de compression 16, ce dernier pouvant être en appui directement contre l'élément de transmission 18. Un matériau adapté, en particulier un acier inoxydable, par exemple contenant du chrome et du titane, permet également une répartition des efforts ponctuels exercés par les différentes parties du ressort.

Tel que visible sur les figures, la garniture d'étanchéité 10 représentée comprend en outre une bague d'appui 20 du ressort de compression 16, plus précisément de l'autre extrémité du ressort de compression 16. Cette bague d'appui 20 présente une partie cylindrique 200 d'axe X et une partie radiale 202 s'étendant en direction de l'axe X. On notera que la partie cylindrique 200 est située en partie en regard de la partie cylindrique 180 de l'élément de transmission 18, alors que la partie radiale 202 s'étend en regard du premier rebord 181 de l'élément de transmission 18. La bague d'appui 20 peut être réalisée en alliage à base de métal, notamment un acier inoxydable, par exemple à base de chrome et titane.

Dans l'exemple représenté, le ressort de compression 16 est un ressort à spires de forme conique, dont l'extrémité de plus petit diamètre est en appui contre le premier rebord 181 de l'élément de transmission 18 alors que son extrémité de plus grand diamètre est en appui contre la bague d'appui 20. L'invention n'est toutefois pas limitée à l'utilisation d'un ressort conique, un ressort cylindrique pourrait être envisagé. Toutefois, un ressort conique permet d'exercer des efforts plus linéaires sur la bague de frottement.

La garniture d'étanchéité 10 représentée sur les figures comprend en outre un élément d'étanchéité secondaire 22 s'étendant en partie entre l'élément de transmission 18 et la bague de frottement 12. Cet élément d'étanchéité secondaire 22 assure notamment une étanchéité statique. Il est par exemple réalisé en matériau polymère, notamment de type élastomère.

Tel que représenté, la bague de frottement 12, l'élément de transmission 18, le ressort de compression 16, mais aussi la bague d'appui 20 ainsi que l'élément d'étanchéité secondaire 22 sont logés à l'intérieur d'un boîtier 30 de la garniture d'étanchéité 10. Ce boîtier 30 est destiné à être fixé solidairement au corps stationnaire de la machine tournante sur lequel la garniture d'étanchéité 10 doit être installée. Autrement dit, le boîtier 30, ainsi que tous ses constituants, sont montés fixes à l'intérieur de la machine. Le boîtier 30 présente ainsi une symétrie d'axe X. Il est ouvert en direction de la contre-bague 14.

Tel que représenté sur les figures, l'élément d'étanchéité secondaire 22 s'étend également en partie entre la bague d'appui 20 et le boîtier 30. Afin de réduire davantage l'encombrement de la garniture d'étanchéité 10, l'élément d'étanchéité secondaire 22 s'étend ici uniquement entre la partie radiale 202 de la bague d'appui 20 et le boîtier 30. Un tel agencement peut permettre de garder un ressort conique sans augmenter le diamètre externe de la garniture d'étanchéité, ou en limitant son augmentation. Il permet également de réduire la quantité de matière nécessaire pour réaliser l'élément d'étanchéité secondaire 22.

Dans l'exemple représenté, cet élément d'étanchéité secondaire 22 comprend, notamment uniquement :
- une première paroi cylindrique 220 d'axe X située entre la paroi cylindrique 180 de l'élément de transmission 18 et la surface cylindrique externe 124 de la bague de frottement 12, contre celles-ci,
- une deuxième paroi radiale 221 s'étendant depuis la première paroi 220 en direction de l'axe X en appui contre la surface 122 de la bague de frottement distante de la contre-bague 14,
- une troisième paroi cylindrique 222 d'axe X s'étendant depuis la deuxième paroi 222 dans une direction opposée à la contre-bague 14,
- une quatrième paroi radiale 224 s'étendant dans une direction opposée à l'axe X depuis la troisième paroi 223.

Dans l'exemple représenté, on notera enfin que l'élément d'étanchéité secondaire 22 comporte une surface radiale de 225 en contact contre une surface radiale 203 de la bague d'appui 20, ces surfaces radiales 225, 203 présentant des décrochements (226, 204 respectivement) complémentaires suivant la direction de l'axe X bloquant ainsi leur déplacement relatif suivant une direction perpendiculaire à l'axe X.

Par ailleurs, dans l'exemple représenté, de manière usuelle, la contre-bague 14 est logée à l'intérieur d'un manchon 40 destiné à être fixé solidairement en rotation à l'arbre rotatif de la machine. Ce manchon 40, d'axe de symétrie X, reçoit en outre une bague 42 servant à la fois de joint et d'élément de blocage de la contre-bague 14. Cette bague 42 peut être en un matériau similaire à celui utilisé pour l'élément d'étanchéité secondaire 22.

Ce manchon 40 est assemblé au boîtier 30, par exemple par sertissage. Ici, des parois cylindriques du manchon et du boîtier internes (proches de l'axe X) et en regard radialement sont serties.

La garniture d'étanchéité selon l'invention présente l'avantage d'être compacte radialement et axialement, le ressort de compression s'étendant notamment en partie autour de la bague de frottement, entre cette dernière et le boîtier.

## Revendications

1. Garniture d'étanchéité (10) destinée à assurer une étanchéité entre un arbre rotatif et un corps stationnaire d'une machine, comprenant :
- une bague de frottement (12) présentant un axe de symétrie X et deux surfaces (120, 122) s'étendant radialement par rapport à l'axe X,
- une contre-bague (14) présentant un axe de symétrie confondu avec l'axe X et une surface de frottement radiale (140) en appui contre l'une (120) des surfaces radiales de la bague de frottement (12),
- un ressort de compression (16) en appui contre un élément de transmission (18) présentant un axe de symétrie confondu avec l'axe X, l'élément de transmission (18) présentant une paroi cylindrique (180) comportant une première extrémité formant un premier rebord radial (181) situé du côté de la contre-bague (14) et s'étendant dans une direction opposée à l'axe X et une deuxième extrémité opposée formant un deuxième rebord radial (182) s'étendant en direction de l'axe X, la bague de frottement (12) présentant une surface externe cylindrique (124) d'axe X reliant, notamment directement, ses deux surfaces radiales (120, 122) et le ressort de compression (16) étant en appui contre le premier rebord (181) de l'élément de transmission (18), le deuxième rebord (182) de l'élément de transmission (18) étant situé en partie en regard de la surface radiale (122) de la bague de frottement distante de la contre-bague (14) et la paroi cylindrique (180) de l'élément de transmission (18) étant située en partie en regard de la surface externe cylindrique (124) de la bague de frottement (12), et la garniture d'étanchéité comprenant en outre :
une bague d'appui (20) du ressort de compression (16), cette bague d'appui (20) présentant une partie cylindrique (200) d'axe X située au moins en partie en regard de la partie cylindrique (180) de l'élément de transmission (18) et une partie radiale (202) s'étendant en direction de l'axe X, en regard du premier rebord (181) de l'élément de transmission (18), ladite garniture d'étanchéité étant **caractérisée en ce qu'**un élément d'étanchéité secondaire (22) s'étend en partie entre l'élément de transmission (18) et la bague de frottement (12) et en partie entre la bague d'appui (20) et un boîtier (30) logeant la bague de frottement (12), l'élément de transmission (18), le ressort de compression (16) et l'élément d'étanchéité secondaire (22).

2. Garniture d'étanchéité (10) selon la revendication 1, **caractérisée en ce que** la paroi cylindrique (180) de l'élément de transmission (18) s'étend sur plus de la moitié, par exemple sur plus des deux tiers, de la longueur de la surface externe cylindrique (124) de la bague de frottement suivant la direction de l'axe X.

3. Garniture d'étanchéité (10) selon la revendication 1 ou 2, **caractérisée en ce que** le premier rebord (181) de l'élément de transmission (18) est distant de la surface de frottement (140) de la contre-bague, suivant l'axe X, d'un jeu prédéterminé.

4. Garniture d'étanchéité (10) selon l'une quelconque des revendications 1 à 3, **caractérisée en ce que** l'élément de transmission (18) est réalisé d'une seule pièce en métal ou alliage.

5. Garniture d'étanchéité (10) selon l'une quelconque des revendications 1 à 4, **caractérisée en ce que** la partie (224) de l'élément d'étanchéité secondaire s'étendant entre la bague d'appui (20) et le boîtier (30) s'étend uniquement entre la partie radiale (202) de la bague d'appui (20) et le boîtier (30), optionnellement aussi entre la bague d'appui et le boîtier du côté de l'axe X.

6. Garniture d'étanchéité (10) selon l'une quelconque des revendications 1 à 5, **caractérisée en ce que** la partie (220, 221) de l'élément d'étanchéité secondaire (20) s'étendant entre l'élément de transmission (18) et la bague de frottement (12) et la partie (224) de l'élément d'étanchéité secondaire s'étendant entre la bague d'appui (20) et le boîtier (30) sont reliées par une partie cylindrique (222) située du côté de l'axe X, s'étendant entre la bague d'appui (20) et l'élément de transmission (18) d'une part et le boîtier (30) d'autre part.

7. Garniture d'étanchéité (10) selon l'une quelconque des revendications 1 à 6, **caractérisée en ce que** l'élément d'étanchéité secondaire (22) est réalisé d'une pièce.

8. Garniture d'étanchéité (10) selon l'une quelconque des revendications 1 à 7, **caractérisée en ce que** des surfaces radiales (225, 203) en contact de l'élément d'étanchéité secondaire (22) et de la bague d'appui (20) présentent des décrochements (226, 204) complémentaires suivant la direction de l'axe X bloquant leur déplacement relatif suivant une direction perpendiculaire à l'axe X.

9. Garniture d'étanchéité (10) selon l'une quelconque des revendications 1 à 8, **caractérisée en ce que** le ressort de compression est un ressort cylindrique à spires.

10. Garniture d'étanchéité (10) selon l'une quelconque des revendications 1 à 8, **caractérisée en ce que** le ressort de compression (16) est un ressort conique à spires.

11. Garniture d'étanchéité (10) selon l'une quelconque des revendications 1 à 10, **caractérisée en ce que** la dimension de l'élément de transmission (18) suivant l'axe X représente 30% ou plus de la dimension totale de garniture dans cette même direction.

12. Garniture d'étanchéité (10) selon l'une quelconque des revendications 1 à 11, **caractérisée en ce que** la dimension de la bague de frottement (12) suivant l'axe X représente 75% ou moins de la dimension totale de la garniture dans cette direction.

13. Garniture d'étanchéité (10) selon l'une quelconque des revendications 1 à 12, **caractérisée en ce qu'**elle comprend en outre un manchon (40) logeant la contre bague (14) et une bague (42) formant un joint et élément de blocage pour la contre-bague et disposé entre celle-ci et le manchon, et **en ce que** le manchon (40) est serti au boîtier (30).

14. Machine tournante comportant un corps stationnaire et un arbre rotatif équipé d'une garniture d'étanchéité selon l'une quelconque des revendications 1 à 13.

## Patentansprüche

1. Dichtungsanordnung (10), die dazu bestimmt ist, eine Abdichtung zwischen einer rotierenden Welle und einem stationären Körper einer Maschine sicherzustellen, umfassend:
- einen Reibring (12), der eine X-Symmetrieachse und zwei Flächen (120, 122) aufweist, die sich radial zur X-Achse erstrecken,
- einen Gegenring (14), der eine Symmetrieachse, die mit der X-Achse zusammenfällt, und eine radiale Reibfläche (140) aufweist, die gegen eine (120) der radialen Flächen des Reibrings (12) anliegt,
- eine Druckfeder (16), die gegen ein Übertragungselement (18) anliegt, das eine Symmetrieachse aufweist, die mit der X-Achse zusammenfällt, wobei das Übertragungselement (18) eine zylindrische Wand (180) aufweist, die ein erstes Ende, das einen ersten radialen Rand (181) bildet, der sich auf der Seite des Gegenrings (14) befindet und sich in eine zur X-Achse entgegengesetzte Richtung erstreckt, und ein gegenüberliegendes zweites Ende umfasst, das einen zweiten radialen Rand (182) bildet, der sich in Richtung der X-Achse erstreckt, wobei der Reibring (12) eine zylindrische Außenfläche (124) mit der X-Achse aufweist, die seine beiden Flächen (120, 122) insbesondere direkt verbindet, und die Druckfeder (16) gegen den ersten Rand (181) des Übertragungselements (18) anliegt, wobei der zweite Rand (182) des Übertragungselements (18) sich teilweise gegenüber der radialen Fläche (122) des Reibrings, die vom Gegenring (14) entfernt ist, befindet und die zylindrische Wand (180) des Übertragungselements (18) sich teilweise gegenüber der zylindrischen Außenfläche (124) des Reibrings (12) befindet, und wobei die Dichtungsanordnung ferner Folgendes umfasst:
einen Stützring (20) der Druckfeder (16), wobei dieser Stützring (20) einen zylindrischen Abschnitt (200) mit der X-Achse, der sich zumindest teilweise gegenüber dem zylindrischen Abschnitt (180) des Übertragungselements (18) befindet, und einen radialen Abschnitt (202) aufweist, der sich gegenüber dem ersten Rand (181) des Übertragungselements (18) in Richtung der X-Achse erstreckt, wobei die Dichtungsanordnung **dadurch gekennzeichnet ist, dass** sich ein sekundäres Dichtungselement (22) teilweise zwischen dem Übertragungselement (18) und dem Reibring (12) und teilweise zwischen dem Stützring (20) und einem Gehäuse (30) erstreckt, in dem der Reibring (12), das Übertragungselement (18), die Druckfeder (16) und das sekundäre Dichtungselement (22) untergebracht sind.

2. Dichtungsanordnung (10) nach Anspruch 1, **dadurch gekennzeichnet, dass** sich die zylindrische Wand (180) des Übertragungselements (18) über mehr als die Hälfte, zum Beispiel über mehr als zwei Drittel, der Länge der zylindrischen Außenfläche (124) des Reibrings entlang der Richtung der X-Achse erstreckt.

3. Dichtungsanordnung (10) nach Anspruch 1 oder 2, **dadurch gekennzeichnet, dass** der erste Rand (181) des Übertragungselements (18) entlang der X-Achse um einen vorbestimmten Abstand von der Reibfläche (140) des Gegenrings entfernt ist.

4. Dichtungsanordnung (10) nach einem der Ansprüche 1 bis 3, **dadurch gekennzeichnet, dass** das Übertragungselement (18) einstückig aus Metall oder Legierung hergestellt ist.

5. Dichtungsanordnung (10) nach einem der Ansprüche 1 bis 4, **dadurch gekennzeichnet, dass** sich der Abschnitt (224) des sekundären Dichtungselements, der sich zwischen dem Stützring (20) und dem Gehäuse (30) erstreckt, nur zwischen dem radialen Abschnitt (202) des Stützrings (20) und dem Gehäuse (30), gegebenenfalls auch zwischen dem Stützring und dem Gehäuse auf der Seite der X-Achse, erstreckt.

6. Dichtungsanordnung (10) nach einem der Ansprüche 1 bis 5, **dadurch gekennzeichnet, dass** der Abschnitt (220, 221) des sekundären Dichtungselements (20), der sich zwischen dem Übertragungselement (18) und dem Reibring (12) erstreckt, und der Abschnitt (224) des sekundären Dichtungselements, der sich zwischen dem Stützring (20) und dem Gehäuse (30) erstreckt, durch einen zylindrischen Abschnitt (222) verbunden sind, der sich auf der Seite der X-Achse befindet und sich zwischen dem Stützring (20) und einerseits dem Übertragungselement (18) und andererseits dem Gehäuse (30) erstreckt.

7. Dichtungsanordnung (10) nach einem der Ansprüche 1 bis 6, **dadurch gekennzeichnet, dass** das sekundäre Dichtungselement (22) einstückig hergestellt ist.

8. Dichtungsanordnung (10) nach einem der Ansprüche 1 bis 7, **dadurch gekennzeichnet, dass** die radialen Flächen (225, 203), die mit dem sekundären Dichtungselement (22) und dem Stützring (20) in Kontakt stehen, komplementäre Rücksprünge (226, 204) entlang der Richtung der X-Achse aufweisen, die ihre relative Verschiebung entlang einer Richtung senkrecht zur X-Achse blockieren.

9. Dichtungsanordnung (10) nach einem der Ansprüche 1 bis 8, **dadurch gekennzeichnet, dass** die Druckfeder eine zylindrische Schraubenfeder ist.

10. Dichtungsanordnung (10) nach einem der Ansprüche 1 bis 8, **dadurch gekennzeichnet, dass** die Druckfeder (16) eine konische Schraubenfeder ist.

11. Dichtungsanordnung (10) nach einem der Ansprüche 1 bis 10, **dadurch gekennzeichnet, dass** die Abmessung des Übertragungselements (18) entlang der X-Achse 30 % oder mehr der Gesamtabmessung der Anordnung in derselben Richtung ausmacht.

12. Dichtungsanordnung (10) nach einem der Ansprüche 1 bis 11, **dadurch gekennzeichnet, dass** die Abmessung des Reibrings (12) entlang der X-Achse 75 % oder weniger der Gesamtabmessung der Anordnung in dieser Richtung ausmacht.

13. Dichtungsanordnung (10) nach einem der Ansprüche 1 bis 12, **dadurch gekennzeichnet, dass** sie ferner eine Hülse (40), in der der Gegenring (14) untergebracht ist, und einen Ring (42) umfasst, der ein Dichtungs- und Blockierelement für den Gegenring bildet und zwischen diesem und der Hülse angeordnet ist, und dadurch, dass die Hülse (40) an das Gehäuse (30) gepresst ist.

14. Drehmaschine, die einen stationären Körper und eine rotierende Welle umfasst und mit einer Dichtungsanordnung nach einem der Ansprüche 1 bis 13 ausgestattet ist.

## Claims

1. A seal (10) intended to ensure a sealing between a rotary shaft and a stationary body of a machine, comprising:
- a friction ring (12) having an axis of symmetry X and two surfaces (120, 122) extending radially with relative to the axis X,
- a counter-ring (14) having an axis of symmetry coincident with the axis X and a radial friction surface (140) bearing against one (120) of the radial surfaces of the friction ring (12),
- a compression spring (16) bearing against a transmission element (18) having an axis of symmetry coincident with the axis X, the transmission element (18) having a cylindrical wall (180) including a first end forming a first radial flange (181) located on the side of the counter-ring (14) and extending in a direction opposite to the axis X and a second opposite end forming a second radial flange (182) extending in the direction of the axis X, the friction ring (12) having a cylindrical outer surface (124) of axis X connecting, in particular directly, the two radial surfaces (120, 122) thereof, and the compression spring (16) bearing against the first flange (181) of the transmission element (18), the second flange (182) of the transmission element (18) being located partially facing the radial surface (122) of the friction ring which is remote from the counter-ring (14) and the cylindrical wall (180) of the transmission element (18) being located partially facing the cylindrical outer surface (124) of the friction ring (12), and the seal further comprising:
a bearing ring (20) of the compression spring (16), this bearing ring (20) having a cylindrical portion (200) of axis X located at least partially facing the cylindrical portion (180) of the transmission element (18) and a radial portion (202) extending in the direction of the axis X, facing the first flange (181) of the transmission element (18),
said seal being **characterised in that** a secondary sealing element (22) extends partially between the transmission element (18) and the friction ring (12) and partially between the bearing ring (20) and a casing (30) housing the friction ring (12), the transmission element (18), the compression spring (16) and the secondary sealing element (22).

2. The seal (10) according to claim 1, **characterised in that** the cylindrical wall (180) of the transmission element (18) extends over more than half, for example over more than two thirds, the length of the cylindrical outer surface (124) of the friction ring in the direction of the axis X.

3. The seal (10) according to claim 1 or 2, **characterised in that** the first flange (181) of the transmission element (18) is remote from the friction surface (140) of the counter-ring, along the X axis, of a predetermined clearance.

4. The seal (10) according to any one of claims 1 to 3, **characterised in that** the transmission element (18) is made in one-piece part of metal or alloy.

5. The seal (10) according to any one of claims 1 to 4, **characterised in that** the portion (224) of the secondary sealing element extending between the bearing ring (20) and the casing (30) extends only between the radial portion (202) of the bearing ring (20) and the casing (30), optionally also between the bearing ring and the casing on the side of the axis X.

6. The seal (10) according to any one of claims 1 to 5, **characterised in that** the portion (220, 221) of the secondary sealing element (20) extending between the transmission element (18) and the friction ring (12) and the portion (224) of the secondary sealing element extending between the bearing ring (20) and the casing (30) are connected by a cylindrical portion (222) located on the side of the axis X, extending between the bearing ring (20) and the transmission element (18), on the one hand, and the casing (30), on the other hand.

7. The seal (10) according to any one of claims 1 to 6, **characterised in that** the secondary sealing element (22) is made in one piece.

8. The seal (10) according to any one of claims 1 to 7, **characterised in that** radial surfaces (225, 203), which are in contact with the secondary sealing element (22) and with the bearing ring (20), have complementary recesses (226, 204) in the direction of the axis X blocking their relative displacement along a direction perpendicular to the axis X.

9. The seal (10) according to any one of claims 1 to 8, **characterised in that** the compression spring is a cylindrical coil spring.

10. The seal (10) according to any one of claims 1 to 8, **characterised in that** the compression spring (16) is a conical coil spring.

11. The seal (10) according to any one of claims 1 to 10, **characterised in that** the dimension of the transmission element (18) along the axis X represents 30% or more of the total seal dimension in this same direction.

12. The seal (10) according to any one of claims 1 to 11, **characterised in that** the dimension of the friction ring (12) along the axis X represents 75% or less of the total dimension of the seal in this direction.

13. The seal (10) according to any one of claims 1 to 12, **characterised in that** it further comprises a sleeve (40) housing the counter-ring (14) and a ring (42) forming a joint and blocking element for the counter-ring and disposed between the latter and the sleeve, and **in that** the sleeve (40) is crimped to the casing (30).

14. A rotating machine including a stationary body and a rotary shaft equipped with a seal according to any one of claims 1 to 13.
